# EUROPEAN PATENT APPLICATION

(11) **EP 4 776 143 A2**
(43) Date of publication of application: **15.07.2026**
(21) Application number: 25217989.0
(22) Date of filing: 24.11.2025
(51) Int. Cl.: G06F 13/38, G06F 13/42

(54) **ELECTRONIC DEVICE, SYSTEM, AND PROGRAM**

(30) Priority: 10.01.2025 JP 2025004357
(71) Applicant: Nintendo Co., Ltd., Kyoto-shi, Kyoto 601-8501 (JP)
(72) Inventor: NARUSE, Fumisato, Kyoto-shi, Kyoto, 601-8501 (JP); YASUDA, Shumpei, Kyoto-shi, Kyoto, 601-8501 (JP); SUZUKI, Kazuhiro, Kyoto-shi, Kyoto, 601-8501 (JP); AJIMIZU, Tatsuya, Kyoto-shi, Kyoto, 601-8501 (JP); FUNAKOSHI, Takahiro, Kyoto-shi, Kyoto, 601-8501 (JP)
(74) Representative: Bardehle Pagenberg Partnerschaft mbB Patentanwälte Rechtsanwälte

(57) **Abstract**

An electronic device configured to connect through a wired connection to each of a plurality of other different electronic devices is provided. The electronic device includes a control unit, an obtaining unit configured to obtain a potential produced upon wired connection to at least one of the other electronic devices, and two first terminals configured to electrically be connected to two respective terminals of a plurality of terminals provided at the at least one of the other electronic devices. The control unit is configured to transmit or receive a signal adapted to communication via I2C through the two first terminals when the obtained potential has a first value, to transmit or receive a signal adapted to communication via UART through the two first terminals when the obtained potential has a second value, and to transmit or receive a signal adapted to communication via SPI through the two first terminals when the obtained potential has a third value.

## Description

The present disclosure relates to an electronic device, a system, and a program.

### INTRODUCTION

For external terminals of an electronic device, generally, a single function is allocated to a single terminal (for example, Japanese Patent Laying-Open No. S63-137465).

### SUMMARY

In an attempt to adapt to a plurality of communication schemes in accordance with electronic devices to which an electronic device is to be connected, the number of terminals increases.

(Configuration 1) According to the present embodiment, an electronic device configured to connect through a wired connection to each of a plurality of other different electronic devices is provided. The electronic device includes a control unit, an obtaining unit that obtains a potential produced upon wired connection to at least one of the other electronic devices, and two first terminals for electrical connection to two respective terminals of a plurality of terminals provided at the at least one of the other electronic devices. The control unit transmits or receives a signal adapted to communication via inter integrated circuit (I2C) through the two first terminals when the obtained potential has a first value, transmits or receives a signal adapted to communication via universal asynchronous receiver transmitter (UART) through the two first terminals when the obtained potential has a second value, and transmits or receives a signal adapted to communication via serial peripheral interface (SPI) through the two first terminals when the obtained potential has a third value.

According to Configuration 1, since functions of two first terminals are changeable in accordance with the obtained potential, the number of terminals to be provided at the electronic device can be suppressed.

Each of the first value, the second value, the third value, and a fourth value may include not only each value itself but also any value present within a predetermined range including the each value. Since there is a design tolerance, disturbance, or the like, each value may not only indicate a specific value but also include variation to some extent. Therefore, the first value, the second value, the third value, and the fourth value can also be read as a first range, a second range, a third range, and a fourth range, respectively. The ranges may be set not to overlap with each other.

(Configuration 2) In Configuration 1, the electronic device may further include two second terminals for electrical connection to two respective other terminals of the plurality of terminals provided at the at least one of the other electronic devices. The control unit may receive a signal indicating a communication request or transmit a signal indicating a communication-enabled state through the two second terminals when the obtained potential has the first value.

(Configuration 3) In Configuration 1 or 2, the obtaining unit may obtain the potential produced in an electrical path formed between a power supply potential of the electronic device and a ground potential of the at least one of the other electronic devices.

(Configuration 4) In any of Configurations 1 to 3, the control unit may transmit or receive a signal indicating permission to transmit data adapted to communication via UART through the two second terminals when the obtained potential has the second value.

(Configuration 5) In any of Configurations 1 to 4, the control unit may transmit or receive a signal adapted to communication via SPI through the two second terminals in addition to the two first terminals when the obtained potential has the third value.

(Configuration 6) In any of Configurations 1 to 4, the control unit may transmit a signal indicating a charged state of the electronic device or receive a signal indicating a charged state of second another electronic device through the two second terminals when the obtained potential has a fourth value.

(Configuration 7) In Configuration 6, the control unit may receive a signal indicating an operation on a user-operable portion provided at the second another electronic device, through at least one of the two second terminals.

(Configuration 8) In Configuration 6 or 7, the electronic device may further include a third terminal for electrical connection to yet another terminal of the plurality of terminals provided at the at least one of the other electronic devices. A notification unit of the at least one of the other electronic devices may give a notification based on a signal from the third terminal when at least one of a condition that the electronic device is being charged or a condition that the second another electronic device is being charged is satisfied.

(Configuration 9) In any of Configurations 1 to 8, the control unit may transmit device information stored in an electrically erasable programmable read-only memory (EEPROM) to the at least one of the other electronic devices when the obtained potential has the first value.

(Configuration 10) In any of Configurations 1 to 9, the electronic device may further include a fourth terminal for forming an electrical path for the obtaining unit to obtain the potential and a fifth terminal for forming another electrical path for the at least one of the other electronic devices to obtain a potential upon wired connection of the electronic device to the at least one of the other electronic devices.

(Configuration 11) In any of Configurations 1 to 10, the electronic device may further include a transmitter that transmits the obtained potential to an external electronic device. The control unit may determine a type of communication in which a signal is to be transmitted or received, based on information from the external electronic device based on the obtained potential.

(Configuration 12) A system according to the present embodiment includes a first electronic device configured to connect through a wired connection to each of a plurality of other different electronic devices and a second electronic device, the second electronic device being another electronic device of the plurality of other different electronic devices. The first electronic device includes a control unit, an obtaining unit that obtains a potential produced upon wired connection to the second electronic device, and two first terminals for electrical connection to two respective terminals of a plurality of terminals provided at the second electronic device. The control unit transmits or receives a signal adapted to communication via I2C through the two first terminals when the obtained potential has a first value, transmits or receives a signal adapted to communication via UART through the two first terminals when the obtained potential has a second value, and transmits or receives a signal adapted to communication via SPI through the two first terminals when the obtained potential has a third value.

(Configuration 13) According to the present embodiment, a program to be executed at an electronic device configured to connect through a wired connection to each of a plurality of other different electronic devices is provided. The electronic device includes two first terminals for electrical connection to two respective terminals of a plurality of terminals provided at at least one of the other electronic devices. The program causes the electronic device to perform processing for obtaining a potential produced upon wired connection to the at least one of the other electronic devices, processing for transmitting or receiving a signal adapted to communication via I2C through the two first terminals when the obtained potential has a first value, processing for transmitting or receiving a signal adapted to communication via UART through the two first terminals when the obtained potential has a second value, and processing for transmitting or receiving a signal adapted to communication via SPI through the two first terminals when the obtained potential has a third value.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows an exemplary illustrative non-limiting drawing illustrating an exemplary configuration of a system according to the present embodiment.
Fig. 2 shows an exemplary illustrative non-limiting drawing illustrating another exemplary configuration of the system according to the present embodiment.
Fig. 3 shows an exemplary illustrative non-limiting drawing illustrating yet another exemplary configuration of the system according to the present embodiment.
Fig. 4 shows an exemplary illustrative non-limiting drawing illustrating an exemplary hardware configuration of a controller according to the present embodiment.
Fig. 5 shows an exemplary illustrative non-limiting drawing illustrating an exemplary hardware configuration of a main body apparatus according to the present embodiment.
Fig. 6 shows an exemplary illustrative non-limiting drawing illustrating an exemplary hardware configuration of an attachment according to the present embodiment.
Figs. 7A and 7B each show an exemplary illustrative non-limiting drawing illustrating an exemplary hardware configuration of an attachment according to the present embodiment.
Fig. 8 shows an exemplary illustrative non-limiting drawing illustrating an exemplary state in which the controller according to the present embodiment has been attached to the main body apparatus.
Fig. 9 shows an exemplary illustrative non-limiting drawing illustrating exemplary processing when the controller according to the present embodiment is attached to the main body apparatus.
Fig. 10 shows an exemplary illustrative non-limiting drawing illustrating an exemplary state in which the controller according to the present embodiment has been attached to the attachment.
Fig. 11 shows an exemplary illustrative non-limiting drawing illustrating exemplary processing when the controller according to the present embodiment is attached to the attachment.
Fig. 12 shows an exemplary illustrative non-limiting drawing illustrating an exemplary state in which the controller according to the present embodiment has been attached to the attachment.
Fig. 13 shows an exemplary illustrative non-limiting drawing illustrating an exemplary state in which the controller according to the present embodiment has been attached to the attachment.
Fig. 14 shows an exemplary illustrative non-limiting drawing illustrating an exemplary state in which the controller according to the present embodiment has been attached to the attachment.

### DETAILED DESCRIPTION

The present embodiment will be described in detail with reference to the drawings. The same or corresponding elements in the drawings have the same reference characters allotted and description thereof will not be repeated.

### [A. Exemplary System Configuration]

An exemplary configuration of a system according to the present embodiment will initially be described. Though an application to a game system will be described below, the technical concept of the present disclosure is applicable to any electronic device.

The game system includes one or more controllers. The controller is an exemplary electronic device. As will be exemplified below, the controller is configured to connect through a wired connection to each of a plurality of other different electronic devices.

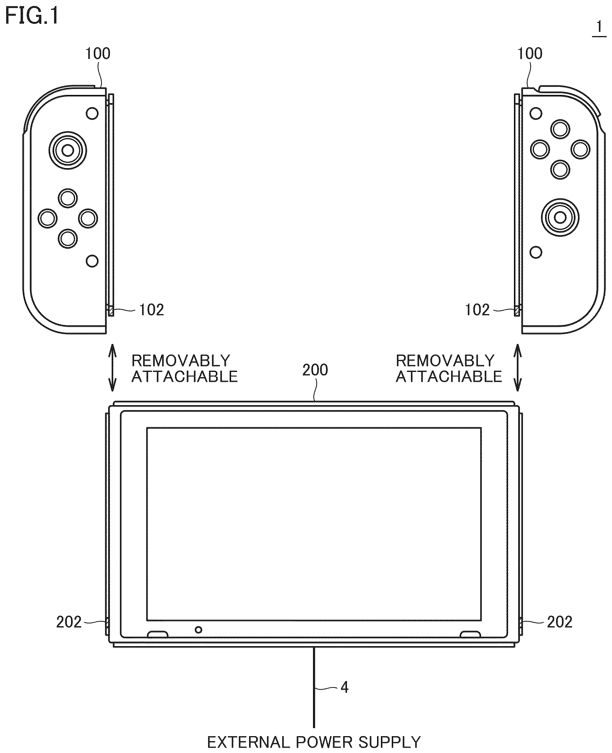

An exemplary configuration of a system 1 according to the present embodiment will be described with reference to Fig. 1. System 1 includes a main body apparatus 200 which is another exemplary electronic device, in addition to one or more controllers 100. Two controllers 100 are each removably attachable to main body apparatus 200.

Controller 100 includes a connector 102 including one or more terminals. As controller 100 is attached to main body apparatus 200, the one or more terminals of connector 102 of controller 100 are electrically connected to respective corresponding terminals of a connector 202 of main body apparatus 200. Controller 100 is connected to main body apparatus 200 through a wired connection established via connector 102 and connector 202.

Controller 100 includes a user-operable portion such as a button, a switch, and/or a stick and transmits a signal indicating details of an operation on the user-operable portion by a user to main body apparatus 200. Controller 100 may include an actuator such as a vibration motor. Controller 100 may have the actuator driven in accordance with a signal from main body apparatus 200.

Controller 100 may include a battery. Electric power for charging the battery of controller 100 may be supplied from main body apparatus 200 as a result of attachment of controller 100 to main body apparatus 200.

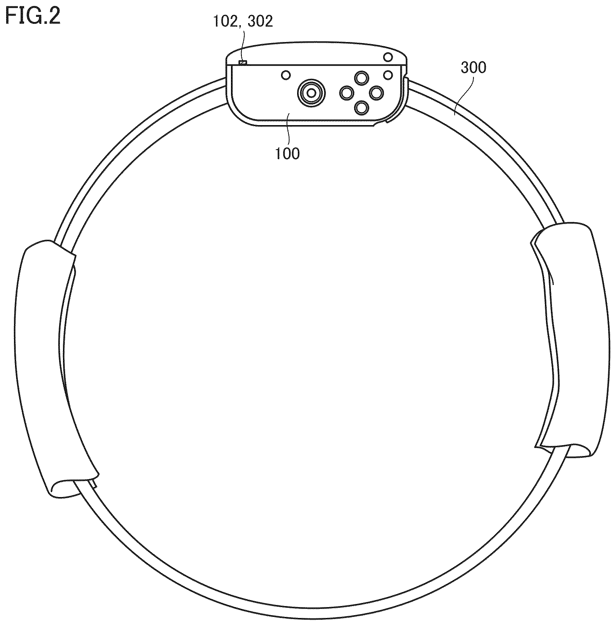

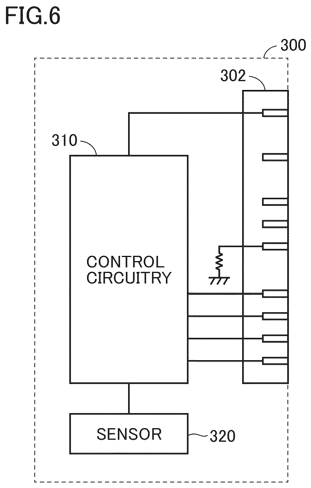

Another exemplary configuration of system 1 according to the present embodiment will be described with reference to Fig. 2. Controller 100 may removably be attachable to an attachment 300. Attachment 300 is another exemplary electronic device. By way of example, attachment 300 includes a sensor (see a sensor 320 or the like in Fig. 6). Connector 102 of controller 100 is electrically connected to a connector 302 of attachment 300. Controller 100 is connected to attachment 300 through a wired connection established via connector 102 and connector 302.

Owing to connector 102 and connector 302, a sensor in attachment 300 is available to controller 100. For example, as external force is applied to ring-shaped attachment 300 and the attachment deforms, controller 100 obtains a signal in accordance with the deformation, from the sensor of attachment 300.

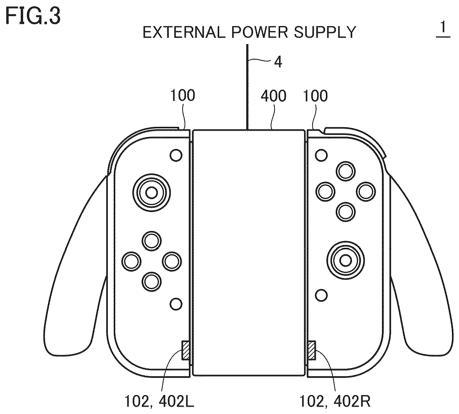

Yet another exemplary configuration of system 1 according to the present embodiment will be described with reference to Fig. 3. One or more controllers 100 may each removably be attachable to an attachment 400. Attachment 400 is another exemplary electronic device. Connector 102 of controller 100 is electrically connected to a connector 402L (or a connector 402R) of attachment 400. Connector 402L and connector 402R will also collectively be referred to as a "connector 402." Controller 100 is connected to attachment 400 through a wired connection established via connector 102 and connector 402. Attachment 400 can also supply at least some of electric power supplied from an external power supply 4 to controller 100 through connector 102 and connector 402.

Connector 102 of controller 100 may be used for wired communication with another electronic device or for supply of electric power from another electronic device. In an example where connector 102 includes a plurality of terminals, at least one of the plurality of terminals may be used for wired communication and at least another one of them may be used for supply of electric power.

### [B. Exemplary Hardware Configuration]

An exemplary hardware configuration of an electronic device included in system 1 according to the present embodiment will now be described.

### (b1: Controller 100)

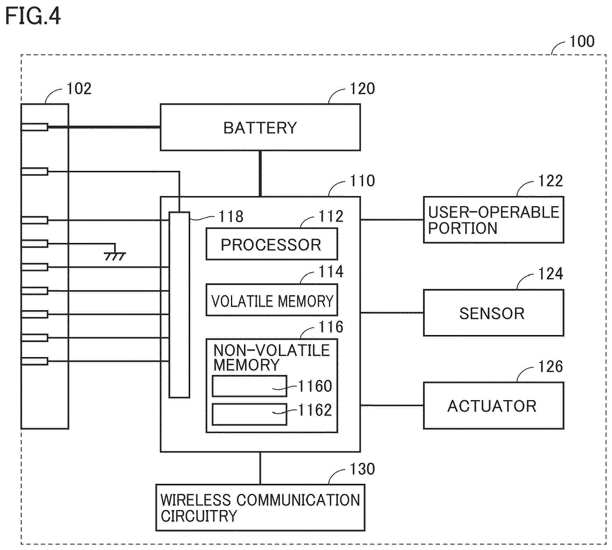

An exemplary hardware configuration of controller 100 according to the present embodiment will be described with reference to Fig. 4. For the sake of convenience of description, Fig. 4 shows an exemplary hardware configuration of a part of controller 100.

Controller 100 includes control circuitry 110, a battery 120, a user-operable portion 122, a sensor 124, an actuator 126, and wireless communication circuitry 130.

Control circuitry 110 performs processing necessary in controller 100. Control circuitry 110 includes a processor 112, a volatile memory 114, a non-volatile memory 116, and interface circuitry 118.

Processor 112 sequentially develops a necessary program among programs stored in non-volatile memory 116 or the like on volatile memory 114 and executes the same. Volatile memory 114 may be, for example, a dynamic random access memory (DRAM), a static random access memory (SRAM), or the like. Non-volatile memory 116 may be, for example, a flash memory, an electrically erasable programmable read-only memory (EEPROM), or the like. A system program 1160 and device information 1162 may be stored in non-volatile memory 116. System program 1160 may be stored in a flash memory. Device information 1162 may be stored in the EEPROM. Device information 1162 includes, for example, a model, a color, a serial number, or the like of controller 100.

Processing in controller 100 as will be described later is performed, for example, by execution of system program 1160 by processor 112.

Interface circuitry 118 is responsible for exchange of a signal with an electronic device connected through connector 102. Interface circuitry 118 may support a plurality of communication schemes.

Control circuitry 110 may be implemented on a single substrate or may be configured with a combination of a plurality of substrates.

Battery 120 supplies electric power to each component of controller 100. Battery 120 may be charged with electric power supplied through connector 102.

User-operable portion 122 outputs a signal indicating a user operation to control circuitry 110. Sensor 124 outputs a signal indicating a behavior or the like of controller 100 to control circuitry 110. Actuator 126 provides a tactile stimulus or the like to the user in accordance with a signal from control circuitry 110.

Wireless communication circuitry 130 is responsible for exchange of a wireless signal with main body apparatus 200 or one or more other devices. Wireless communication circuitry 130 may adapt to a wireless network in conformity, for example, with Bluetooth^{®}, ZigBee^{®}, wireless LAN (IEEE 802.11), or the like.

Controller 100 may have an active state and a sleep state lower in power consumption than the active state. Controller 100 returns from the sleep state to the active state when a predetermined condition is satisfied.

### (b2: Main Body Apparatus 200)

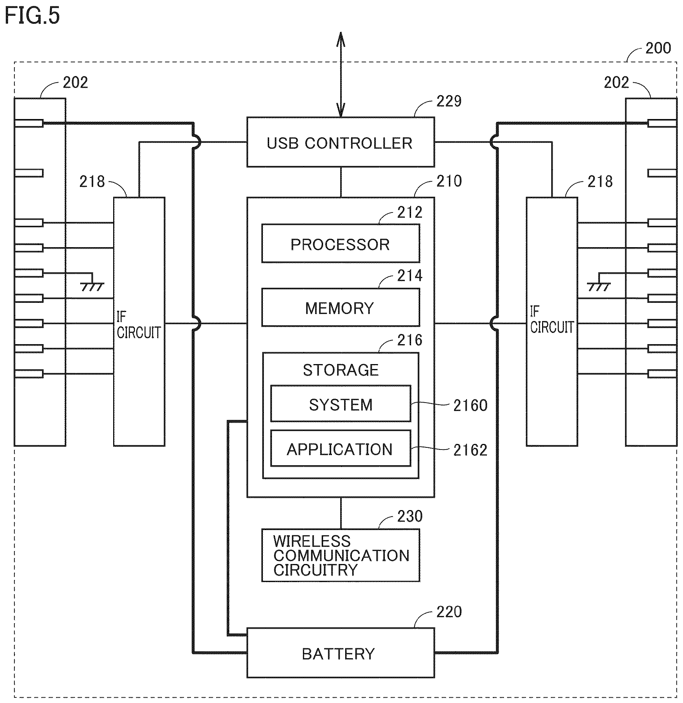

An exemplary hardware configuration of main body apparatus 200 according to the present embodiment will be described with reference to Fig. 5. For the sake of convenience of description, Fig. 5 shows an exemplary hardware configuration of a part of main body apparatus 200.

Main body apparatus 200 includes control circuitry 210, interface circuitry 218, a battery 220, wireless communication circuitry 230, and a universal serial bus (USB) controller 229.

Control circuitry 210 performs processing necessary in main body apparatus 200. Control circuitry 210 includes a processor 212, a volatile memory 214, and a storage 216. Processor 212 and volatile memory 214 are similar to processor 112 and volatile memory 114 described above.

Storage 216 may be, for example, a flash memory, a hard disk drive (HDD), or the like. A system program 2160 and an application program 2162 may be stored in storage 216.

Interface circuitry 218 is responsible for exchange of a signal with an electronic device connected through connector 202. Interface circuitry 218 may support a plurality of communication schemes. Main body apparatus 200 includes two sets of interface circuitry 218 and connector 202. Two pieces of interface circuitry 218 may be able to operate independently of each other.

Battery 220 supplies electric power to each component of main body apparatus 200. Battery 220 may supply electric power to an electronic device connected through connector 202 or may be charged with electric power supplied from an external power supply.

USB controller 229 is responsible for exchange of a signal with a USB-connected electronic device (for example, controller 100). USB controller 229 can also exchange electric power through USB connection.

Wireless communication circuitry 230 is responsible for exchange of a wireless signal with one or more controllers 100 or one or more other devices. Wireless communication circuitry 230 may adapt to a wireless network in conformity, for example, with Bluetooth^{®}, ZigBee^{®}, wireless LAN (IEEE 802.11), or the like.

Main body apparatus 200 may have an active state and a sleep state lower in power consumption than the active state. Main body apparatus 200 returns from the sleep state to the active state when a predetermined condition is satisfied.

### (b3: Attachment 300)

An exemplary hardware configuration of attachment 300 according to the present embodiment will be described with reference to Fig. 6. For the sake of convenience of description, Fig. 6 shows an exemplary hardware configuration of a part of attachment 300.

Attachment 300 includes control circuitry 310 and sensor 320.

Control circuitry 310 performs processing necessary in attachment 300. Control circuitry 310 is responsible for exchange of a signal with an electronic device connected through connector 302. Control circuitry 310 may support one communication scheme. Control circuitry 310 may be supplied with electric power from an electronic device connected through connector 302.

Sensor 320 senses predetermined mechanical or physical change or the like and outputs a signal indicating a sensing value to control circuitry 310.

### (b4: Attachment 400)

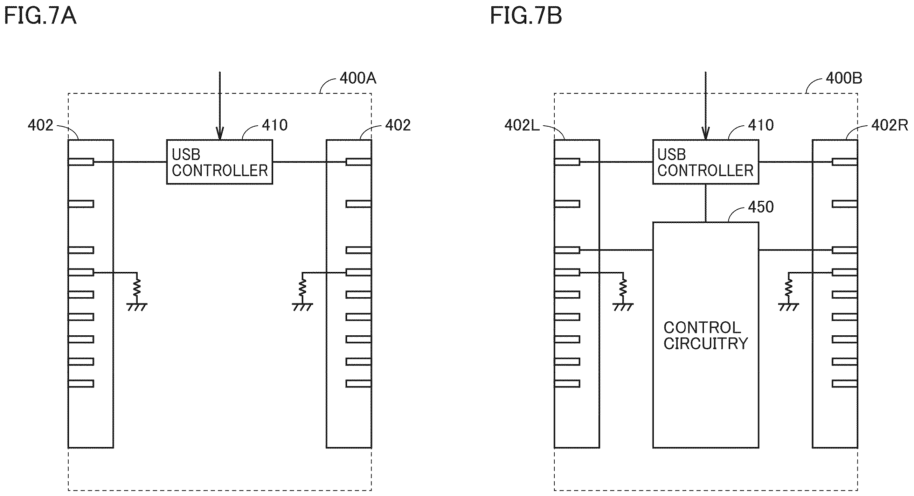

An exemplary hardware configuration of attachment 400 according to the present embodiment will be described with reference to Figs. 7A and 7B. For the sake of convenience of description, Figs. 7A and 7B show an exemplary hardware configuration of a part of attachment 400.

An attachment 400A shown in Fig. 7A includes a USB controller 410. USB controller 410 allows supply of electric power supplied through USB connection to an electronic device connected to connector 402.

An attachment 400B shown in Fig. 7B further includes control circuitry 450 as compared with attachment 400A shown in Fig. 7A. Control circuitry 450 is responsible for processing for exchanging data with a USB-connected electronic device and processing for exchanging data with an electronic device connected through connector 402. For example, attachment 400B shown in Fig. 7B can also obtain a charged state of an electronic device connected through connector 402.

In the description below, attachment 400A and attachment 400B will also collectively be referred to as "attachment 400."

### [C. Communication Scheme]

In system 1 according to the present embodiment, controller 100 may select a specific communication scheme from among a plurality of communication schemes in exchange of data with an electronic device (for example, main body apparatus 200, attachment 300, attachment 400, or the like) connected through the wired connection.

The plurality of communication schemes may be, for example, at least two of inter integrated circuit (I2C), universal asynchronous receiver transmitter (UART), and serial peripheral interface (SPI).

I2C is a serial bus communication scheme that uses, for example, two signal lines. Through the two signal lines, serial clock (SCL) and serial data (SDA) are transmitted, respectively.

UART is an asynchronous serial communication scheme that uses, for example, two signal lines. Through the two signal lines, transmission data (TXD) and reception data (RXD) are transmitted, respectively. In addition to the two signal lines, a control line (request to send, RTS) for permission of data transmission to a communication counterpart and a control line (clear to send, CTS) for acceptance of permission of data transmission from a communication counterpart may be used.

SPI is a serial bus that uses, for example, four signal lines. Through the four signal lines, slave select (CS), serial clock (CLK), master in slave out (MISO), and master out slave in (MOSI) are transmitted, respectively.

In system 1 according to the present embodiment, a plurality of terminals included in the connector are used in common for communication based on the communication scheme selected from among the plurality of communication schemes. A port of control circuitry 110 of controller 100 may transmit or receive a signal in accordance with the selected communication scheme. By using the plurality of terminals in common, a terminal or a port for each communication scheme does not have to be prepared. Processing for selection of a communication scheme from among the plurality of communication schemes will be described later.

### [D. Exemplary Processing]

Some examples of processing in attachment and removal of an electronic device to and from controller 100 will now be described.

### (d1: Attachment of Controller 100 to Main Body Apparatus 200)

As controller 100 is attached to main body apparatus 200, controller 100 and main body apparatus 200 may start communication via I2C and communication via USB therebetween. In general, a time period necessary for starting communication via I2C is shorter than a time period necessary for starting communication via USB. A rate of communication (for example, 3.4 Mbps at the maximum) via I2C, on the other hand, is lower than a rate of communication (for example, not lower than 12 Mbps) via USB. Therefore, immediately after attachment of controller 100 to main body apparatus 200, communication via I2C may mainly be used and thereafter communication via USB may mainly be used.

In communication via I2C, main body apparatus 200 operates as a master and controller 100 operates as a slave.

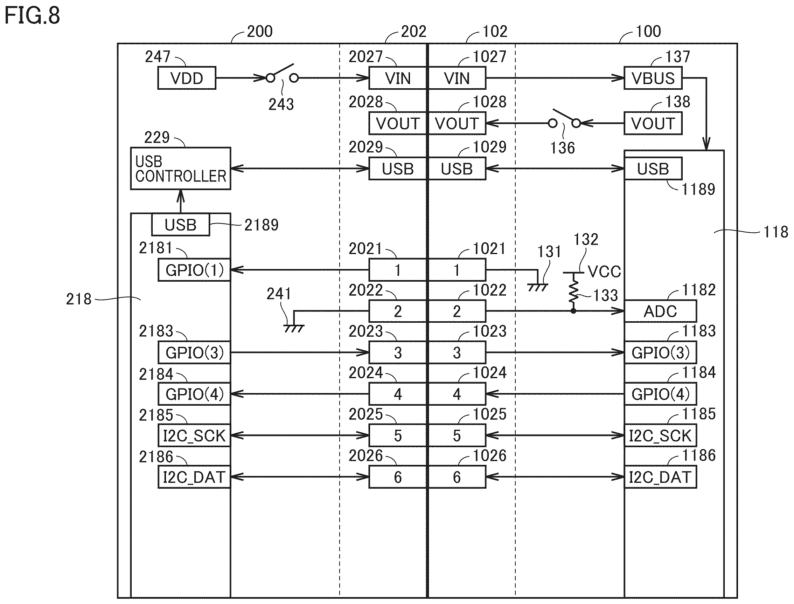

An exemplary state in which controller 100 according to the present embodiment has been attached to main body apparatus 200 will be described with reference to Fig. 8.

Connector 102 of controller 100 includes T1 to T6 terminals 1021 to 1026, a power supply input terminal 1027, a power supply output terminal 1028, and a USB terminal 1029.

Interface circuitry 118 of controller 100 includes an analog-digital converter (ADC) port 1182, general purpose input output (GPIO) ports 1183 and 1184, communication ports 1185 and 1186, and a USB port 1189.

T2 terminal 1022 is used for identification of an electronic device attached to controller 100. T2 terminal 1022 is electrically connected to ADC port 1182 of interface circuitry 118. A line that electrically connects T2 terminal 1022 and ADC port 1182 to each other is electrically connected to a power supply potential 132 with a resistor 133 being interposed. T2 terminal 1022 is thus maintained at power supply potential 132 of controller 100 while it is not electrically connected to another terminal. ADC port 1182 samples an analog input (for example, a potential) and converts the analog input to a digital signal. ADC port 1182 obtains the potential of an inputted signal. ADC port 1182 may have, for example, a resolution of eight levels. For example, in an example where an input range of ADC port 1182 is from 0 to 5 V, in accordance with in which of sections delimited every 0.625 V (5 V/8 levels) the inputted signal is included, determination as one of a level-0 value to a level-7 value is made.

ADC port 1182 (or control circuitry 110) obtains the potential produced upon wired connection of controller 100 to another electronic device. T2 terminal 1022 may be used for forming an electrical path for ADC port 1182 (or control circuitry 110) to obtain the potential. Circuitry of another electronic device attached to controller 100 may be designed such that the potential (or the level value) obtained by ADC port 1182 has a value different depending on attached another electronic device.

The "potential" obtained by ADC port 1182 can also be read as a "voltage (or potential difference) with a ground potential of controller 100 being defined as the reference."

T1 terminal 1021 is electrically connected to a ground potential 131 of controller 100. The potential of T1 terminal 1021 is thus maintained at ground potential 131 of controller 100. T1 terminal 1021 may be used for forming another electrical path for another electronic device to obtain the potential in a case of wired connection of controller 100 to that another electronic device. For example, a GPIO (1) port 2181 (or control circuitry 210) of main body apparatus 200 may sense change in potential caused in the electrical path including T1 terminal 1021, details of which will be described later.

T3 terminal 1023 and T4 terminal 1024 are electrically connected to a GPIO (3) port 1183 and a GPIO (4) port 1184, respectively. GPIO (3) port 1183 and GPIO (4) port 1184 can function as any of an input port configured to accept a signal from another electronic device and an output port configured to output a signal to another electronic device, in accordance with setting or the like. For example, GPIO (3) port 1183 and GPIO (4) port 1184 receive input or provide output of binary values of Low (which will also be abbreviated as "L" below) and High (which will also be abbreviated as "H" below).

In the present embodiment, GPIO (3) port 1183 is set as the input port. T3 terminal 1023 and GPIO (3) port 1183 accept a signal for returning from the sleep state to the active state from another electronic device. T3 terminal 1023 and GPIO (3) port 1183 may accept a signal indicating a communication request from another electronic device. At this time, an H signal may indicate presence of the communication request and an L signal may indicate absence of the communication request.

In the present embodiment, GPIO (4) port 1184 is set as the output port. T4 terminal 1024 and GPIO (4) port 1184 output a signal for returning from the sleep state to the active state to another electronic device. T4 terminal 1024 and GPIO (4) port 1184 may output a signal indicating a communication-enabled state to another electronic device. At this time, the H signal may indicate that communication can be established and the L signal may indicate that communication cannot be established.

T3 terminal 1023 and T4 terminal 1024 are thus used for controlling return from the sleep state to the active state. T3 terminal 1023 and T4 terminal 1024 may be used for giving a notification about a communication state.

T5 terminal 1025 and T6 terminal 1026 are electrically connected to communication port 1185 and communication port 1186, respectively. T5 terminal 1025 and T6 terminal 1026 are electrically connected to two terminals (T5 terminal 2025 and T6 terminal 2026) of a plurality of terminals provided at another electronic device, respectively. Communication ports 1185 and 1186 accept a signal in accordance with the selected communication scheme and output a signal in accordance with the selected communication scheme.

More specifically, in communication via I2C, a serial clock is transmitted through a path via communication port 1185, T5 terminal 1025, T5 terminal 2025, and communication port 2185. Serial data is transmitted through a path via communication port 1186, T6 terminal 1026, T6 terminal 2026, and communication port 2186.

Control circuitry 110 of controller 100 thus transmits or receives the signals indicating the communication request and the communication-enabled state through T4 terminal 1024 and T3 terminal 1023 and transmits or receives the signal adapted to communication via I2C through T5 terminal 1025 and T6 terminal 1026.

By using GPIO (3) port 1183 and GPIO (4) port 1184 to transmit or receive the signals indicating the communication request and the communication-enabled state, a clock stretch function in I2C communication may be performed. For example, controller 100 that operates as the slave may transmit the signal indicating that communication can be established after data to be transmitted is ready. When main body apparatus 200 that operates as the master receives the signal indicating that communication cannot be established, it suspends transmission of the serial clock. Such a situation that data to be transmitted by controller 100 is not ready by the timing requested by another electronic device (main body apparatus 200 in this example) can thus be avoided.

Power supply input terminal 1027 is used for reception of supply of electric power from another electronic device. Power supply input terminal 1027 is electrically connected to interface circuitry 118 through a power supply bus 137.

Power supply output terminal 1028 is used for supply of electric power to another electronic device. Power supply output terminal 1028 is electrically connected to a power supply output 138 of controller 100. Power supply output 138 is electrically connected to battery 120 (see Fig. 4) of controller 100. A switch 136 is provided at a line between power supply output 138 and power supply output terminal 1028. Switch 136 can electrically disconnect power supply output 138 and power supply output terminal 1028 from each other.

USB port 1189 is an interface for USB connection to another electronic device. USB terminal 1029 is electrically connected to USB port 1189. USB terminal 1029 may include a plurality of terminals.

Connector 202 of main body apparatus 200, on the other hand, includes T1 to T6 terminals 2021 to 2026, a power supply output terminal 2027, a power supply input terminal 2028, and a USB terminal 2029.

Interface circuitry 218 of main body apparatus 200 includes a GPIO (1) port 2181, a GPIO (3) port 2183, a GPIO (4) port 2184, communication ports 2185 and 2186, and a USB port 2189.

T1 terminal 2021 is used for identification of an electronic device attached to main body apparatus 200. T1 terminal 2021 is electrically connected to GPIO (1) port 2181 of interface circuitry 218.

T2 terminal 2022 is electrically connected to a ground potential 241 of main body apparatus 200. A potential at T2 terminal 2022 is thus maintained at ground potential 241 of main body apparatus 200.

T3 terminal 2023 and T4 terminal 2024 are electrically connected to GPIO (3) port 2183 and GPIO (4) port 2184, respectively.

T5 terminal 2025 and T6 terminal 2026 are electrically connected to communication port 2185 and communication port 2186, respectively. Communication ports 2185 and 2186 accept a signal in accordance with a selected communication scheme and output a signal in accordance with the selected communication scheme.

Power supply output terminal 2027 is used for supply of electric power to another electronic device. Power supply output terminal 2027 is electrically connected to a power supply output 247 of main body apparatus 200. Power supply output 247 is electrically connected to battery 220 (see Fig. 5) of main body apparatus 200. A switch 243 is provided at a line between power supply output 247 and power supply output terminal 2027. Switch 243 can electrically disconnect power supply output 247 and power supply output terminal 2027 from each other.

USB port 2189 is electrically connected to USB controller 229. USB terminal 2029 is electrically connected to USB controller 229. USB terminal 2029 may include a plurality of terminals. USB controller 229 may function as a USB hub for an electronic device to be connected to main body apparatus 200 and an electronic device to be USB-connected through USB terminal 2029.

Exemplary processing when controller 100 is attached to main body apparatus 200 will be described below.

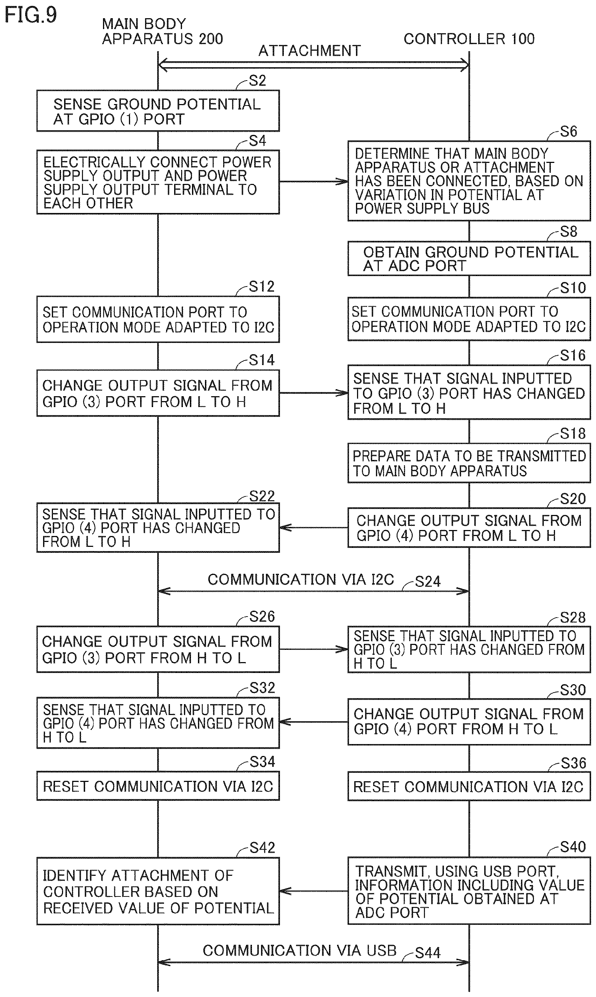

Exemplary processing when controller 100 according to the present embodiment is attached to main body apparatus 200 will be described with reference to Fig. 9. In main body apparatus 200, GPIO (3) port 2183 is set as the output port and GPIO (4) port 2184 is set as the input port.

As controller 100 is attached to main body apparatus 200, T1 terminal 1021 of controller 100 and T1 terminal 2021 of main body apparatus 200 are electrically connected to each other, and therefore GPIO (1) port 2181 senses ground potential 131 (that is, L) (step S2).

Based on sensing of ground potential 131 by GPIO (1) port 2181, main body apparatus 200 determines that controller 100 has been attached (step S2). In succession, main body apparatus 200 closes switch 243. Main body apparatus 200 thus electrically connects power supply output 247 and power supply output terminal 2027 to each other (step S4).

Based on production of the potential of the power supply output at power supply bus 137, controller 100 determines that main body apparatus 200 or attachment 400 has been connected (step S6).

Since T2 terminal 1022 of controller 100 and T2 terminal 2022 of main body apparatus 200 are electrically connected to each other, an electrical path is formed between power supply potential 132 of controller 100 and ground potential 241 of main body apparatus 200. Controller 100 obtains the potential produced in this path. Since most of voltage lowering from power supply potential 132 to ground potential 241 occurs in resistor 133, ADC port 1182 of controller 100 obtains ground potential 241 (step S8).

Based on obtainment of ground potential 241 by ADC port 1182, controller 100 determines that it has been attached to main body apparatus 200. As will be described later, when controller 100 is attached to attachment 300 or attachment 400, the potential obtained at ADC port 1182 will be different.

Through processing above, controller 100 and main body apparatus 200 identify to which they have been attached. Controller 100 and main body apparatus 200 are set or designed in advance to select I2C as the communication scheme when they are connected to each other.

Controller 100 sets communication ports 1185 and 1186 to an operation mode adapted to I2C (step S10). Main body apparatus 200 sets communication ports 2185 and 2186 to the operation mode adapted to I2C (step S12).

Main body apparatus 200 changes an output signal from GPIO (3) port 2183 from L to H (step S14). When controller 100 senses change of the signal inputted to GPIO (3) port 1183 from L to H (step S16), it prepares data to be transmitted to main body apparatus 200 (step S18). For example, controller 100 incorporates device information 1162 stored in non-volatile memory 116 into data to be transmitted to main body apparatus 200.

Controller 100 changes an output signal from GPIO (4) port 1184 from L to H (step S20). When main body apparatus 200 senses change of the signal inputted to GPIO (4) port 2184 from L to H (step S22), it starts communication via I2C, using communication ports 2185 and 2186 (step S24). In other words, communication via I2C between controller 100 and main body apparatus 200 is started.

When transmission/reception of data is completed, main body apparatus 200 changes the output signal from GPIO (3) port 2183 from H to L (step S26). When controller 100 senses change of the signal inputted to GPIO (3) port 1183 from H to L (step S28), it changes the output signal from GPIO (4) port 1184 from H to L (step S30). When main body apparatus 200 senses change of the signal inputted to GPIO (4) port 2184 from H to L (step S32), it resets communication via I2C using communication ports 2185 and 2186 (step S34). Controller 100 also resets communication via I2C using communication ports 1185 and 1186 (step S36).

A series of processing in steps S14 to S36 may be repeated each time communication via I2C is performed.

Controller 100 transmits, using USB port 1189, information including a value of the potential (a value indicating the ground potential in the example described above) obtained at ADC port 1182 to main body apparatus 200 (step S40). When main body apparatus 200 receives, using USB port 2189, the information including the value of the potential from controller 100, it identifies attachment of controller 100 to main body apparatus 200 based on the received value of the potential (step S42). Main body apparatus 200 may switch to a predetermined mode in accordance with connection to controller 100. Main body apparatus 200 starts communication by USB with controller 100 (step S44).

Processing in steps S40 to S44 should only be performed after step S8, and completion of processing in steps S10 to S36 does not have to be waited for.

Exemplary processing in removal of controller 100 from main body apparatus 200 will now be described.

As controller 100 is removed from main body apparatus 200, there is no electrical connection between T1 terminal 2021 of main body apparatus 200 and T1 terminal 1021 of controller 100, and hence the potential sensed by GPIO (1) port 2181 of main body apparatus 200 changes from the ground potential to a floating potential. In other words, GPIO (1) port 2181 is no longer able to sense L. Main body apparatus 200 determines that controller 100 has been removed, based on change in sensed potential. In succession, main body apparatus 200 opens switch 243.

As controller 100 is removed from main body apparatus 200, controller 100 senses stop of supply of electric power from main body apparatus 200. In addition, controller 100 senses change from the ground potential to the power supply potential based on the potential obtained by ADC port 1182. For example, controller 100 may determine that it has been removed from main body apparatus 200 when it enters a state in which supply of electric power from main body apparatus 200 is stopped and ADC port 1182 is obtaining the power supply potential.

Controller 100 does not have to determine that it has been removed from main body apparatus 200 when main body apparatus 200 is in the sleep state and a remaining capacity of the battery of main body apparatus 200 is equal to or smaller than a predetermined value. In other words, in that state, controller 100 may determine that it is attached to main body apparatus 200.

In a modification, when controller 100 and main body apparatus 200 identify to which they have been attached and thereafter controller 100 makes transition to the sleep state, controller 100 may return to the active state in response to pressing of a not-shown power button of main body apparatus 200. Even while controller 100 is in the sleep state, GPIO (3) port 1183 is active. As the power button is pressed, main body apparatus 200 changes the output signal from GPIO (3) port 2183 from L to H. As change of the signal inputted to GPIO (3) port 1183 from L to H is sensed, controller 100 returns from the sleep state to the active state. Controller 100 and main body apparatus 200 then perform processing similar to processing in step S16 or later in Fig. 9.

In a modification, when controller 100 and main body apparatus 200 identify to which they have been attached and thereafter controller 100 and main body apparatus 200 make transition to the sleep state, main body apparatus 200 may return to the active state in response to pressing of a not-shown specific button of controller 100. Even while main body apparatus 200 in the sleep state, GPIO (4) port 2184 is active. As the predetermined button is pressed, controller 100 changes the output signal from GPIO (4) port 1184 from L to H. As change of the signal inputted to GPIO (4) port 2184 from L to H is sensed, main body apparatus 200 returns from the sleep state to the active state. Main body apparatus 200 then changes the output signal from GPIO (3) port 2183 from L to H. Thereafter, controller 100 and main body apparatus 200 perform processing similar to processing in step S16 or later in Fig. 9.

Though two controllers 100 are attachable to main body apparatus 200, the processing described above may be performed for each of attached controllers 100. In other words, in an example where two controllers 100 are attached to main body apparatus 200, controllers 100 may perform the processing described above independently of each other.

### (d2: Attachment of Controller 100 to Attachment 300)

As controller 100 is attached to attachment 300, controller 100 may start communication via UART with attachment 300. Attachment 300 is configured to communicate via UART.

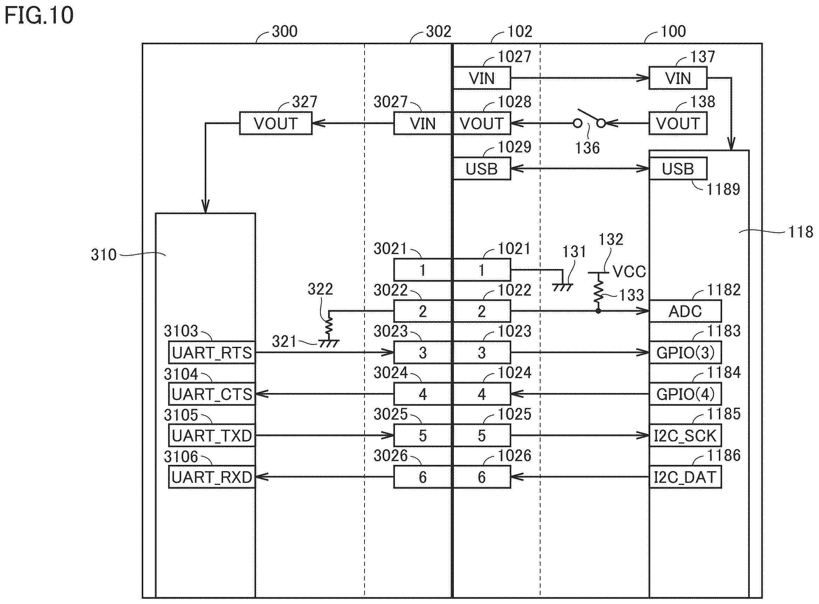

An exemplary state in which controller 100 according to the present embodiment has been attached to attachment 300 will be described with reference to Fig. 10. Since the configuration of controller 100 has been described above, detailed description will not be repeated.

Connector 302 of attachment 300 includes T1 to T6 terminals 3021 to 3026 and a power supply input terminal 3027.

Control circuitry 310 of attachment 300 includes communication control ports 3103 and 3104 and communication ports 3105 and 3106.

T1 terminal 3021 does not have to electrically be connected to a component.

T2 terminal 3022 is used for identification of attachment of controller 100 to attachment 300. T2 terminal 3022 is electrically connected to a ground potential 321 of attachment 300 with a resistor 322 being interposed.

T3 terminal 3023 and T4 terminal 3024 are electrically connected to communication control port 3103 and communication control port 3104, respectively. Communication control ports 3103 and 3104 are used for transmission or reception of control lines (RTS and CTS) in communication via UART.

T5 terminal 3025 and T6 terminal 3026 are electrically connected to communication port 3105 and communication port 3106, respectively. Communication ports 3105 and 3106 are used for transmission or reception of data (TXD and RXD) according to UART.

Power supply input terminal 3027 is used for reception of supply of electric power from another electronic device. Power supply input terminal 3027 is electrically connected to control circuitry 310 through a power supply bus 327.

Exemplary processing when controller 100 is attached to attachment 300 will be described below.

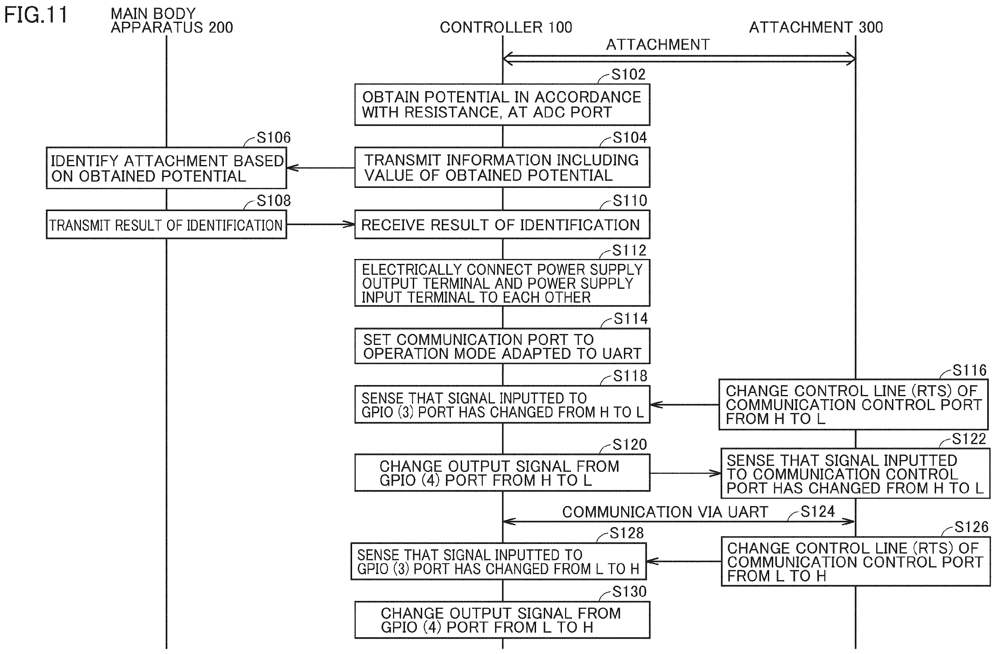

Exemplary processing when controller 100 according to the present embodiment is attached to attachment 300 will be described with reference to Fig. 11. In controller 100, GPIO (3) port 1183 is set as the input port and GPIO (4) port 1184 is set as the output port. Controller 100 is wirelessly connected to main body apparatus 200.

As controller 100 is attached to attachment 300, T2 terminal 1022 of controller 100 and T2 terminal 3022 of attachment 300 are electrically connected to each other. As a result of this connection, an electrical path is formed between power supply potential 132 of controller 100 and ground potential 321 of attachment 300. Controller 100 obtains a potential produced in this path. Since voltage lowering from power supply potential 132 to ground potential 321 is proportionally split between resistor 133 and resistor 322, ADC port 1182 of controller 100 obtains the potential in accordance with resistor 133 and resistor 322 (step S102). Specifically, a value calculated by multiplying a ratio of a resistance value of resistor 322 to the sum of a resistance value of resistor 133 and the resistance value of resistor 322 by power supply potential 132 is the obtained potential.

Controller 100 transmits information including the value of the obtained potential to main body apparatus 200 (step S104). For example, controller 100 transmits, using wireless communication circuitry 130, the potential obtained by ADC port 1182 to main body apparatus 200 which is an exemplary external electronic device.

When main body apparatus 200 receives the information including the value of the potential from controller 100 by wireless connection, it identifies attachment of attachment 300 to controller 100 based on the received value of the potential (step S106). Main body apparatus 200 transmits to controller 100, a result of identification that controller 100 has been attached to attachment 300 (step S108).

When controller 100 receives the result of identification from main body apparatus 200 (step S110), it closes switch 136. In other words, controller 100 electrically connects power supply output terminal 1028 and power supply input terminal 3027 to each other (step S112). Supply of electric power to attachment 300 is thus started.

Controller 100 is set or designed in advance to select UART as the communication scheme when controller 100 and attachment 300 are connected to each other. Controller 100 sets GPIO ports 1183 and 1184 and communication ports 1185 and 1186 to the operation mode adapted to UART in accordance with the result of identification that it has been attached to attachment 300 (step S114).

Specifically, GPIO (3) port 1183 is responsible for the control line (CTS), GPIO (4) port 1184 is responsible for the control line (RTS), communication port 1185 is responsible for reception of reception data (RXD), and communication port 1186 is responsible for transmission of transmission data (TXD).

Attachment 300 is designed to communicate via UART. In succession, communication via UART between controller 100 and attachment 300 is started.

Controller 100 thus determines a type of communication in which a signal is to be transmitted or received, based on information from an external electronic device based on the obtained potential.

Attachment 300, on the other hand, starts processing in response to supply of electric power from controller 100. For example, attachment 300 changes the control line (RTS) of communication control port 3103 from H to L (step S116). The L signal outputted from communication control port 3103 indicates that attachment 300 can receive data from controller 100.

When controller 100 senses change of the signal (corresponding to CTS) inputted to GPIO (3) port 1183 from H to L (step S118), it changes the output signal (corresponding to RST) from GPIO (4) port 1184 from H to L (step S120). The L signal outputted from GPIO (4) port 1184 indicates that controller 100 can receive data from attachment 300.

Attachment 300 senses change of the control line (CTS) of communication control port 3104 from H to L (step S122). Thereafter, attachment 300 starts communication via UART, using communication ports 3105 and 3106 (step S124). Communication port 3105 of attachment 300 transmits data to controller 100 and communication port 1186 of controller 100 receives the data. Communication port 1185 of controller 100 transmits data to attachment 300 and communication port 3106 of attachment 300 receives the data.

As transmission/reception of the data is completed, attachment 300 changes the control line (RTS) of communication control port 3103 from L to H (step S126). When controller 100 senses change of the signal inputted to GPIO (3) port 1183 from L to H (step S128), it changes the output signal (corresponding to RST) from GPIO (4) port 1184 from L to H (step S130).

Processing in steps S116 to S130 is repeated when transmission/reception between controller 100 and attachment 300 is performed.

In transmission/reception between controller 100 and attachment 300, control circuitry 110 of controller 100 transmits or receives the signals (RTS and CTS) indicating permission to transmit data corresponding to communication via UART through T4 terminal 1024 and T3 terminal 1023, and transmits or receives the signals (TXD and RXD) corresponding to communication via UART through T5 terminal 1025 and T6 terminal 1026.

Exemplary processing in removal of controller 100 from attachment 300 will now be described.

As controller 100 is removed from attachment 300, the potential obtained at ADC port 1182 changes from the potential in accordance with resistor 133 and resistor 322 to the power supply potential. Controller 100 transmits information including a value of the obtained potential to main body apparatus 200. Main body apparatus 200 determines that controller 100 has been removed from attachment 300 based on change in obtained potential. Main body apparatus 200 notifies controller 100 of removal from attachment 300. In succession, controller 100 opens switch 136.

As controller 100 is removed, attachment 300 is no longer supplied with electric power from controller 100 and hence it stops operating.

### (d3: Attachment of Controller 100 to Modification of Attachment 300)

As controller 100 is attached to an attachment 300A, controller 100 may start communication with attachment 300A via SPI. Attachment 300A is configured to communicate via SPI.

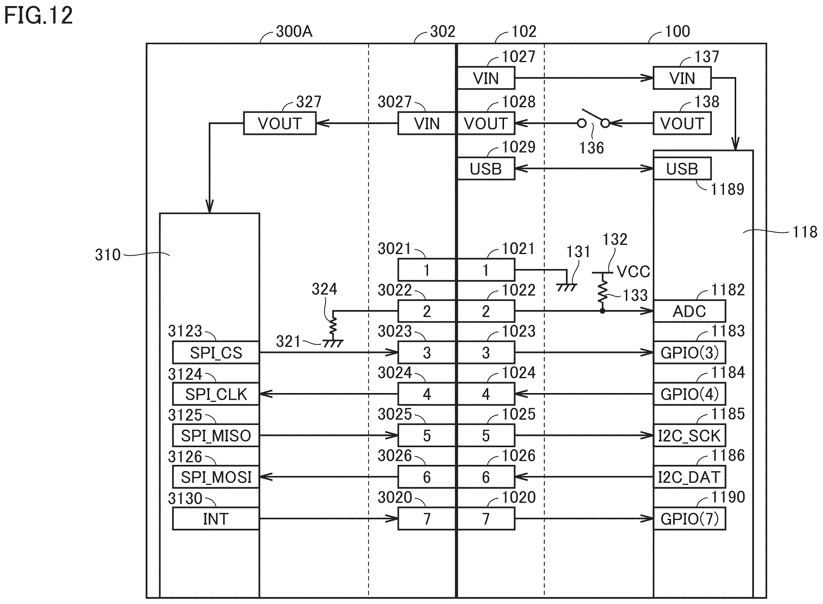

An exemplary state in which controller 100 according to the present embodiment has been attached to attachment 300A will be described with reference to Fig. 12.

Attachment 300A shown in Fig. 12 is configured to communicate via SPI. Connector 302 of attachment 300A includes a T7 terminal 3020 in addition to T1 to T6 terminals 3021 to 3026 and power supply input terminal 3027.

Connector 102 of controller 100 shown in Fig. 12 further includes a T7 terminal 1020. Interface circuitry 118 of controller 100 further includes a GPIO (7) port 1190.

Control circuitry 310 of attachment 300A shown in Fig. 12 includes communication ports 3123, 3124, 3125, and 3126 and an interrupt port 3130.

Communication port 3123 is electrically connected to T3 terminal 3023 and transmits a slave select signal. Communication port 3124 is electrically connected to T4 terminal 3024 and receives a serial clock signal. Communication port 3125 is electrically connected to T5 terminal 3025 and transmits or receives a master in slave out signal. Communication port 3126 is electrically connected to T6 terminal 3026 and transmits or receives a master out slave in signal.

Interrupt port 3130 is electrically connected to T7 terminal 3020 and transmits an interrupt signal.

GPIO (7) port 1190 of controller 100 is electrically connected to T7 terminal 1020 and receives the interrupt signal from attachment 300A.

Exemplary processing when controller 100 is attached to attachment 300A will be described below.

In attachment 300A shown in Fig. 12, a resistor 324 is provided between T2 terminal 3022 and ground potential 321. Resistor 324 is different in resistance value from resistor 322 of attachment 300 shown in Fig. 10. As controller 100 is attached to attachment 300A, ADC port 1182 of controller 100 obtains a potential in accordance with resistor 133 and resistor 324. Controller 100 transmits information including a value of the obtained potential to main body apparatus 200 by USB connection or wireless connection.

Main body apparatus 200 identifies which type of attachment has been attached to controller 100 based on magnitude of the obtained potential or a range of the potential. In this case, main body apparatus 200 identifies attachment of attachment 300A to controller 100.

Controller 100 sets GPIO (3) port 1183 and GPIO (4) port 1184 as well as communication ports 1185 and 1186 to the operation mode adapted to SPI, in accordance with a result of identification that it has been attached to attachment 300A.

As attachment 300A transmits the interrupt signal from interrupt port 3130, communication via SPI between controller 100 and attachment 300A is started. In transmission/reception between controller 100 and attachment 300A, control circuitry 110 of controller 100 transmits or receives the signal adapted to communication via SPI through T3 terminal 1023 and T4 terminal 1024 as well as T5 terminal 1025 and T6 terminal 1026.

Except for the difference in communication scheme, processing is otherwise similar to the processing described above.

### (d4: Attachment of Controller 100 to Yet Another Modification of Attachment 300)

As controller 100 is attached to yet another attachment, controller 100 may start communication with the attachment via I2C. The attachment is configured to communicate via I2C. In this case, control circuitry 310 of attachment 300 may include two GPIO ports and two communication ports similarly to interface circuitry 218 in Fig. 8.

In attachment 300 configured to communicate via I2C, a resistance value of a resistor provided between T2 terminal 3022 and ground potential 321 is set to a value different from each of the resistance value of resistor 322 and the resistance value of resistor 324.

As a result of such selection of the resistance value, main body apparatus 200 can identify the attachment connected to controller 100.

When controller 100 receives a result of identification that it has been attached to the attachment configured to communicate via I2C, it sets communication ports 1185 and 1186 to the operation mode adapted to I2C. In transmission/reception between controller 100 and the attachment, control circuitry 110 of controller 100 transmits or receives the signals indicating the communication request and the communication-enabled state through T4 terminal 1024 and T3 terminal 1023 and transmits or receives the signal adapted to communication by I2C through T5 terminal 1025 and T6 terminal 1026. Processing involved with communication is similar to the processing shown in Fig. 9.

### (d5: Attachment of Controller 100 to Attachment 400A)

As controller 100 is attached to attachment 400A, controller 100 may start communication via I2C with another controller 100 attached to attachment 400A. Attachment 400A does not perform a function for wired communication with another electronic device. Each of controllers 100 may start communication by USB with another electronic device (not shown) connected to attachment 400A.

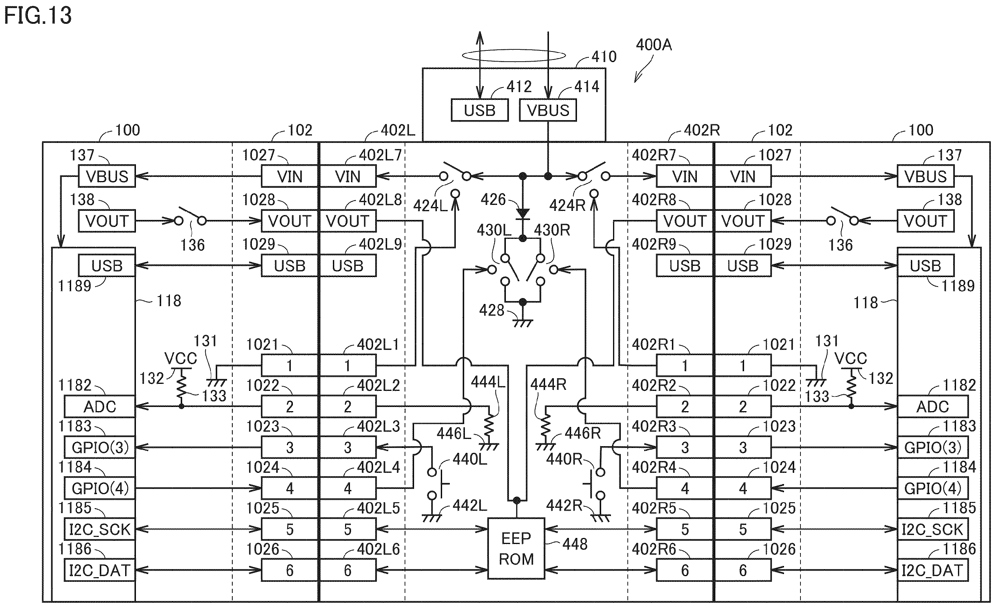

An exemplary state in which controller 100 according to the present embodiment has been attached to attachment 400A will be described with reference to Fig. 13. Since the configuration of controller 100 has been described above, detailed description will not be repeated.

Connector 402R of attachment 400A includes T1 to T6 terminals 402R1 to 402R6, a power supply output terminal 402R7, a power supply input terminal 402R8, and a USB terminal 402R9. Similarly, connector 402L of attachment 400A includes T1 to T6 terminals 402L1 to 402L6, a power supply output terminal 402L7, a power supply input terminal 402L8, and a USB terminal 402L9.

T1 terminal 402R1 is electrically connected to a control terminal of a switch 424R. Similarly, T1 terminal 402L1 is electrically connected to a control terminal of a switch 424L.

T2 terminal 402R2 is electrically connected to a ground potential 446R with a resistor 444R being interposed. Similarly, T2 terminal 402L2 is electrically connected to a ground potential 446L with a resistor 444L being interposed.

T3 terminal 402R3 is electrically connected to a ground potential 442R with a switch 440R being interposed. T2 terminal 402L3 is electrically connected to a ground potential 442L with a switch 440L being interposed.

For example, switch 440R may mechanically be connected to a first user-operable portion provided at attachment 400A and switch 440L may mechanically be connected to a second user-operable portion provided at attachment 400A. As switch 440R is turned on in response to an input operation on the first user-operable portion of attachment 400A, T3 terminal 402R3 and ground potential 442R may electrically be connected to each other. As switch 440L is turned on in response to an input operation on the second user-operable portion of attachment 400A, T3 terminal 402L3 and ground potential 442L may electrically be connected to each other. The first user-operable portion of attachment 400A may be arranged, for example, at a position where it can be pressed down by the user's right hand when the user holds attachment 400A with both hands. The second user-operable portion of attachment 400A may be arranged, for example, at a position where it can be pressed down by the user's left hand.

Controller 100 attached to a side of connector 402R of attachment 400A senses at GPIO (3) port 1183, the input operation on the first user-operable portion of attachment 400A upon electrical connection of T3 terminal 402R3 and ground potential 442R to each other with switch 440R being interposed as a result of the input operation on the first user-operable portion of attachment 400A. Similarly, controller 100 attached to a side of connector 402L of attachment 400A senses at GPIO (3) port 1183, the input operation on the second user-operable portion of attachment 400A upon electrical connection of T3 terminal 402L3 and ground potential 442L to each other with switch 440L being interposed as a result of the input operation on the second user-operable portion of attachment 400A.

T4 terminal 402R4 is electrically connected to a control terminal of a switch 430R. Similarly, T4 terminal 402L4 is electrically connected to a control terminal of a switch 430L.

T5 terminal 402R5 and T6 terminal 402R6 are electrically connected to an EEPROM 448. Similarly, T5 terminal 402L5 and T6 terminal 402L6 are electrically connected to EEPROM 448. These electrical connections are made for access to EEPROM 448 by respective controllers 100.

Device information or the like of attachment 400 may be stored in EEPROM 448.

Power supply output terminal 402R7 is electrically connected to a power supply bus 414 of USB controller 410 with switch 424R being interposed. Similarly, power supply output terminal 402L7 is electrically connected to power supply bus 414 of USB controller 410 with switch 424L being interposed.

Power supply input terminal 402R8 is electrically connected to EEPROM 448. Similarly, power supply input terminal 402L8 is electrically connected to EEPROM 448.

Exemplary processing when controller 100 is attached to attachment 400A will be described below.

As controller 100 is attached to the side of connector 402R of attachment 400A, T1 terminal 1021 of controller 100 and T1 terminal 402R1 of attachment 400A are electrically connected to each other. As a result of this connection, ground potential 131 is applied to the control terminal of switch 424R. Switch 424R is thus turned on, and power supply bus 414 is electrically connected to interface circuitry 118 through power supply output terminal 402R7, power supply input terminal 1027, and power supply bus 137. In other words, electric power is supplied from attachment 400A to controller 100.

As controller 100 is attached to the side of connector 402R of attachment 400A, ADC port 1182 of controller 100 obtains the potential in accordance with resistor 133 and resistor 444R. Controller 100 transmits information including a value of the obtained potential to main body apparatus 200 by USB connection or wireless connection.

Main body apparatus 200 identifies which type of attachment has been attached to controller 100 based on magnitude of the obtained potential or a range of the potential. In this case, main body apparatus 200 identifies attachment of controller 100 to attachment 400A.

Controller 100 may set communication ports 1185 and 1186 to the operation mode adapted to I2C in accordance with a result of identification that it has been attached to attachment 400A. With setting of communication ports 1185 and 1186 to the operation mode adapted to I2C, controller 100 may close switch 136. Electric power is thus supplied from power supply output 138 of controller 100 to EEPROM 448 through power supply output terminal 1028 and power supply input terminal 402R8. Electric power supplied to EEPROM 448 may be used for an operation for access to EEPROM 448 by controller 100 through communication via I2C.

Controller 100 changes the output signal from GPIO (4) port 1184 from L to H while it is charged with electric power from attachment 400A, in accordance with the result of identification that it has been attached to attachment 400A. Then, an H output signal from controller 100 is applied to the control terminal of switch 430R. Switch 430R is thus turned on and a current flows from power supply bus 414 through an LED 426 to a ground potential 428. In other words, LED 426 turns on. LED 426 is an exemplary notification unit and arranged at a position where it is exposed at attachment 400A.

LED 426 turns on when at least one of switch 430R or switch 430L is on. Therefore, when at least one of a condition that controller 100 attached to the side of connector 402R of attachment 400A is being charged or a condition that controller 100 connected to the side of connector 402L of attachment 400A is being charged is satisfied, LED 426 of attachment 400A gives a notification based on a signal outputted from GPIO (4) port 1184 of at least one controller 100.

While at least one controller 100 attached to attachment 400A is thus being charged, LED 426 turns on.

While controller 100 is attached to attachment 400A, electric power is kept supplied from attachment 400A to controller 100. Controller 100, on the other hand, may determine whether or not the battery can be charged with electric power supplied from attachment 400A based on the charged state of the battery (battery 120 in Fig. 4). For example, when the battery is close to full charge, controller 100 may not have the battery charged with electric power supplied from attachment 400A. In this case, since the output signal from GPIO (4) port 1184 is L, controller 100 turns off LED 426.

As controller 100 is attached to the side of connector 402L of attachment 400A, processing and operations as in attachment of controller 100 to the side of connector 402R of attachment 400A described above are performed.

Switch 440R and switch 440L can also be used for return of controller 100 from the sleep state to the active state. As switch 440R is operated, switch 440R is closed and GPIO (3) port 1183 of controller 100 senses the L signal. As GPIO (3) port 1183 senses L, controller 100 returns from the sleep state to the active state. This is also applicable to an example where switch 440L is operated.

While only a single controller 100 is attached to attachment 400A, controller 100 may start wireless communication.

### (d6: Attachment of Controller 100 to Attachment 400B)

As controller 100 is attached to attachment 400B, controller 100 may start communication via I2C with attachment 400B. Attachment 400B is configured to communicate via I2C. Each of controllers 100 may start communication via USB with another electronic device (not shown) connected to attachment 400B.

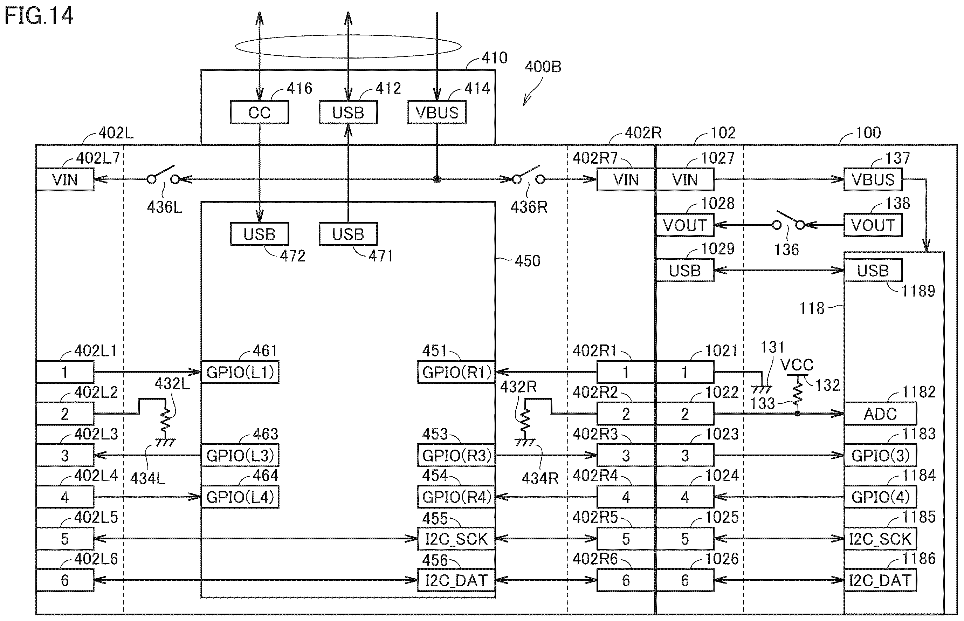

An exemplary state in which controller 100 according to the present embodiment has been attached to attachment 400B will be described with reference to Fig. 14. Since the configuration of controller 100 has been described above, detailed description will not be repeated.

Attachment 400B performs a function for wired communication with another electronic device. By way of example, attachment 400B may be configured to communicate via I2C. Two controllers 100 attached to attachment 400B may communicate with each other through a wired connection.

Connector 402R of attachment 400B includes T1 to T6 terminals 402R1 to 402R6 and power supply output terminal 402R7. Similarly, connector 402L of attachment 400B includes T1 to T6 terminals 402L1 to 402L6 and power supply output terminal 402L7.

Control circuitry 450 includes GPIO ports 451, 453, 454, 461, 463, and 464, communication ports 455 and 456, and USB ports 471 and 472.

T1 terminal 402R1 is electrically connected to GPIO (R1) port 451. Similarly, T1 terminal 402L1 is electrically connected to GPIO (L1) port 461.

T2 terminal 402R2 is electrically connected to a ground potential 434R with a resistor 432R being interposed. Similarly T2 terminal 402L2 is electrically connected to a ground potential 434L with a resistor 432L being interposed.

T3 terminal 402R3 is electrically connected to GPIO (R3) port 453. Similarly, T3 terminal 402L3 is electrically connected to GPIO (L3) port 463.

T4 terminal 402R4 is electrically connected to GPIO (R4) port 454. Similarly, T4 terminal 402L4 is electrically connected to GPIO (L4) port 464.

T5 terminal 402R5 and T5 terminal 402L5 are electrically connected to communication port 455. T6 terminal 402R6 and T6 terminal 402L6 are electrically connected to communication port 456.

Power supply output terminal 402R7 is electrically connected to power supply bus 414 of USB controller 410 with a switch 436R being interposed. Similarly, power supply output terminal 402L7 is electrically connected to power supply bus 414 of USB controller 410 with a switch 436L being interposed.

USB port 471 of control circuitry 450 is electrically connected to USB port 412 of USB controller 410. USB port 472 of control circuitry 450 is electrically connected to a configuration channel (CC) port 416 of USB controller 410.

Exemplary processing when controller 100 is attached to attachment 400B will be described below.

As controller 100 is attached to the side of connector 402R of attachment 400B, T1 terminal 1021 of controller 100 and T1 terminal 402R1 of attachment 400B are electrically connected to each other and hence GPIO (R1) port 451 senses ground potential 131 (that is, L). Attachment 400B determines that controller 100 has been attached to the side of connector 402R based on sensing of ground potential 131 by GPIO (R1) port 451. In succession, attachment 400B closes switch 436R. Supply of electric power to controller 100 is thus activated.

As controller 100 is attached to the side of connector 402R of attachment 400B, T2 terminal 1022 of controller 100 and T2 terminal 402R2 of attachment 400B are electrically connected to each other. As a result of this connection, an electrical path is formed between power supply potential 132 of controller 100 and ground potential 434R of attachment 400B. The potential produced in this path is obtained. Since voltage lowering from power supply potential 132 to ground potential 434R is proportionally split between resistor 133 and resistor 432R, ADC port 1182 of controller 100 obtains the potential in accordance with resistor 133 and resistor 432R. Controller 100 transmits information including a value of the potential obtained at ADC port 1182 to main body apparatus 200. When main body apparatus 200 receives the information including the value of the potential from controller 100, it identifies attachment of controller 100 to attachment 400B based on the received value of the potential. Main body apparatus 200 transmits to controller 100, a result of identification that controller 100 has been attached to attachment 400B.

In succession, controller 100 sets communication ports 1185 and 1186 to the operation mode adapted to I2C. Controller 100 then changes the output signal from GPIO (4) port 1184 from L to H.

When attachment 400B senses change of the signal inputted to GPIO (R4) port 454 from L to H, it changes the output signal from GPIO (R3) port 453 from L to H.

When controller 100 senses change of the signal inputted to GPIO (3) port 1183 from L to H, it starts communication via I2C. At this time, control circuitry 110 of each of controllers 100 transmits or receives the signals indicating the communication request and the communication-enabled state through T3 terminal 1023 and T4 terminal 1024 and transmits or receives the signal adapted to communication via I2C through T5 terminal 1025 and T6 terminal 1026.

As controller 100 is attached to the side of connector 402L of attachment 400B, on the other hand, T1 terminal 1021 of controller 100 and T1 terminal 402L1 of attachment 400B are electrically connected to each other and hence GPIO (L1) port 461 senses ground potential 131 (that is, L). Attachment 400B determines that controller 100 has been attached to the side of connector 402L based on sensing of ground potential 131 by GPIO (L1) port 461. In succession, attachment 400B closes switch 436L. Supply of electric power to controller 100 is thus activated.

As controller 100 is attached to the side of connector 402L of attachment 400B, processing similar to the processing described above is performed. When attachment 400B then senses change of the signal inputted to GPIO (L4) port 464 from L to H, it changes the output signal from GPIO (L3) port 463 from L to H.

Processing and operations are otherwise similar to those in attachment of controller 100 to the side of connector 402R of attachment 400B.

### (d7: Design of Resistance Value)

The potential obtained by ADC port 1182 of controller 100 has a value that allows identification of an electronic device to which controller 100 is attached. For example, resistor 322 (see Fig. 10) of attachment 300, resistor 324 (see Fig. 12) of attachment 300A, resistor 444R (or resistor 444L) (see Fig. 13) of attachment 400A, and resistor 432R (or resistor 432L) (see Fig. 14) of attachment 400B are designed to be different in resistance value from one another. Magnitude of each resistance value may be determined in accordance with the resolution (or level) of ADC port 1182.

### [E. Modification]

Processing necessary in the electronic device described above may be performed by execution of a program by a processor, or a part or the entirety of the processing may be performed by hard-wired circuitry such as an application specific integrated circuit (ASIC) or a field programmable gate array (FPGA). Therefore, the term "processor" herein encompasses also hard-wired circuitry such as an ASIC or an FPGA in addition to a central processing unit (CPU), a micro processing unit (MPU), a graphics processing unit (GPU), or the like. The hard-wired circuitry may be an integrated circuit (IC) small in circuit scale.

Though an exemplary configuration in which the potential obtained by ADC port 1182 of controller 100 is transmitted to main body apparatus 200 and main body apparatus 200 identifies an electronic device connected to controller 100 is described in the description above, the entirety or a part of processing for identification of the electronic device connected to controller 100 may be implemented by controller 100.

Though controllers 100 adapted to I2C, UART, and SPI are exemplified in the description above, a configuration adapted to only two of these communication schemes may be adopted.

### [F. Advantages]

Since controller 100 according to the present embodiment can change the function of the communication port or the terminal electrically connected to the communication port in accordance with the obtained potential, the number of terminals to be provided in the electronic device can be suppressed.

Even when an electronic device to which controller 100 according to the present embodiment is attached does not include a battery, controller 100 can obtain a produced potential by giving a power supply potential thereof to the electronic device.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. An electronic device (100) configured to connect through a wired connection to each of a plurality of other different electronic devices (200; 300; 300A; 400A; 400B), the electronic device comprising:
a control unit (110);
an obtaining unit (1182) configured to obtain a potential produced upon wired connection to at least one of the other electronic devices; and
two first terminals (1025, 1026) configured to electrically be connected to two respective terminals (2025, 2026) of a plurality of terminals provided at the at least one of the other electronic devices, wherein
the control unit is configured to
transmit or receive a signal adapted to communication via inter integrated circuit (I2C) through the two first terminals when the obtained potential has a first value,
transmit or receive a signal adapted to communication via universal asynchronous receiver transmitter (UART) through the two first terminals when the obtained potential has a second value, and
transmit or receive a signal adapted to communication via serial peripheral interface (SPI) through the two first terminals when the obtained potential has a third value.

2. The electronic device according to claim 1, further comprising two second terminals (1023, 1024) configured to electrically be connected to two respective other terminals (2023, 2024) of the plurality of terminals provided at the at least one of the other electronic devices, wherein
the control unit is configured to receive a signal indicating a communication request or transmit a signal indicating a communication-enabled state through the two second terminals when the obtained potential has the first value.

3. The electronic device according to claim 1 or 2, wherein
the obtaining unit is configured to obtain the potential produced in an electrical path formed between a power supply potential (132) of the electronic device and a ground potential (241) of the at least one of the other electronic devices.

4. The electronic device according to claim 2, wherein
the control unit is configured to transmit or receive a signal indicating permission to transmit data adapted to communication via UART through the two second terminals when the obtained potential has the second value.

5. The electronic device according to claim 2, wherein
the control unit is configured to transmit or receive a signal adapted to communication via SPI through the two second terminals in addition to the two first terminals when the obtained potential has the third value.

6. The electronic device according to claim 2, wherein
the control unit is configured to transmit a signal indicating a charged state of the electronic device or receive a signal indicating a charged state of second another electronic device through the two second terminals when the obtained potential has a fourth value.

7. The electronic device according to claim 6, wherein
the control unit is configured to receive a signal indicating an operation on a user-operable portion provided at the second another electronic device, through at least one of the two second terminals.

8. The electronic device according to claim 6 or 7, further comprising a third terminal (1024) configured to electrically be connected to yet another terminal of the plurality of terminals provided at the at least one of the other electronic devices, wherein
a notification unit (426) of the at least one of the other electronic devices is configured to give a notification based on a signal from the third terminal when at least one of a condition that the electronic device is being charged or a condition that the second another electronic device is being charged is satisfied.

9. The electronic device according to any one of claims 1 to 8, wherein
the control unit is configured to transmit device information stored in an electrically erasable programmable read-only memory (EEPROM) to the at least one of the other electronic devices when the obtained potential has the first value.

10. The electronic device according to any one of claims 1 to 9, further comprising:
a fourth terminal (1022) configured to form an electrical path for the obtaining unit to obtain the potential; and
a fifth terminal (1021) configured to form another electrical path for the at least one of the other electronic devices to obtain a potential upon wired connection of the electronic device to the at least one of the other electronic devices.

11. The electronic device according to any one of claims 1 to 10, further comprising a transmitter (130) configured to transmit the obtained potential to an external electronic device, wherein
the control unit is configured to determine a type of communication in which a signal is to be transmitted or received, based on information from the external electronic device based on the obtained potential.

12. A system comprising:
the electronic device (100) according to any of claims 1 to 11, the electronic device configured to connect through a wired connection to each of a plurality of other different electronic devices (200; 300; 300A; 400A; 400B); and
a second electronic device, the second electronic device being another electronic device of the plurality of other different electronic devices.

13. A program (1160) to be executed at an electronic device (100) configured to connect through a wired connection to each of a plurality of other different electronic devices (200; 300; 300A; 400A; 400B), the electronic device comprising two first terminals (1025, 1026) configured to electrically be connected to two respective terminals (2025, 2026) of a plurality of terminals provided at at least one of the other electronic devices, the program causing the electronic device to perform:
processing (S8) for obtaining a potential produced upon wired connection to the at least one of the other electronic devices;
processing (S10, S16, S18, S20, S24, S28, S30) for transmitting or receiving a signal adapted to communication via inter integrated circuit (I2C) through the two first terminals when the obtained potential has a first value;
processing (S114, S118, S120, S124, S128, S130) for transmitting or receiving a signal adapted to communication via universal asynchronous receiver transmitter (UART) through the two first terminals when the obtained potential has a second value; and
processing for transmitting or receiving a signal adapted to communication via serial peripheral interface (SPI) through the two first terminals when the obtained potential has a third value.
